# EUROPEAN PATENT SPECIFICATION

(11) **EP 3 492 248 B1**
(45) Date of publication and mention of the grant of the patent: **25.08.2021**
(21) Application number: 17834232.5
(22) Date of filing: 24.07.2017
(51) Int. Cl.: B29B 11/16, B29C 70/28, B25J 15/00

(54) **PREFORM PRODUCTION APPARATUS AND PREFORM PRODUCTION METHOD**
VORFORMHERSTELLUNGSVORRICHTUNG UND VORFORMHERSTELLUNGSVERFAHREN
APPAREIL DE PRODUCTION DE PRÉFORME ET PROCÉDÉ DE PRODUCTION DE PRÉFORME

(30) Priority: 27.07.2016 JP 2016146842
(43) Date of publication of application: 05.06.2019
(73) Proprietor: Mitsubishi Chemical Corporation, Tokyo 100-8251 (JP)
(72) Inventor: MIYAUCHI Akira, Tokyo 100-8251 (JP); SAMEJIMA Tadao, Tokyo 100-8251 (JP); OKUTSU Hajime, Tokyo 100-8251 (JP)
(74) Representative: Hoffmann Eitle
(86) International application number: PCT/JP2017/026646
(87) International publication number: WO 2018/021226

(56) References cited:
- WO-A1-2010/055063
- WO-A1-2015/151054
- JP-A- 2004 237 535
- JP-A- 2006 188 791
- JP-A- 2006 335 049
- JP-A- 2011 110 899
- JP-A- 2013 525 140
- US-A1- 2004 102 136
- US-A1- 2015 041 048

## Description

### TECHNICAL FIELD

The present invention relates to a preform production apparatus and a preform production method for shaping a reinforcing fiber base material into a specified shape prior to main molding thereof in order to obtain a fiber-reinforced resin molding of a desired shape.

### BACKGROUND ART

In the related art, there is known a technology of obtaining a fiber-reinforced resin molding of a specified shape by heating and pressurizing, in a molding tool, reinforcing fiber base materials such as sheet-shaped prepregs obtained by impregnating a reinforcing fiber with an uncured thermosetting resin, for example (for example, see WO 04/48435 A).

Furthermore, there is also known a technology of performing shaping in advance prior to main molding by the above-described technology and producing a preform such that a sheet-shaped reinforcing fiber base material or prepreg has a specified shape obtained by taking a shape of a final molding into consideration in a case where a fiber-reinforced resin molding is produced, and a shape of a desired fiber-reinforced resin molding is a three-dimensional shape including a curved surface (for example, see JP 2007-1298 A or JP 2006-7492 A).

US 2015/0041048 A1 relates to an apparatus for forming composite plies on a contoured tool includes a forming head for forming the composite plies on the tool. The forming head is mounted on a manipulator and includes a compliant nosepiece adapted to conform to the contoured tool.

Another document is WO 2010/055063 A1 which refers to method of, and an apparatus for, manufacturing fibre-reinforced parts such as blades for wind power plants, whereby a number of layers of material comprising fibre are arranged on a curved surface of an elongated open mould so that some of the layers of material overlap at least partially.

### SUMMARY OF THE INVENTION

### PROBLEM TO BE SOLVED BY THE INVENTION

However, in the case of producing a preform of a complex three-dimensional shape having particularly unevenness, large curvature, or the like, a problem arises in that wrinkles or zigzagging of fibers is likely to occur during shaping of a reinforcing fiber base material, for example, a sheet-shaped prepreg.

In this respect, in a preform production apparatus and a preform production method for obtaining a fiber-reinforced resin molding of a desired shape according to the invention, an object thereof is to limit the occurrence of wrinkles, zigzagging of fibers, and cracking during shaping of a reinforcing fiber base material, for example, a sheet-shaped prepreg such that a preform having a good external appearance is obtained.

### MEANS FOR SOLVING PROBLEM

The present invention provides a preform production apparatus comprising the features of claim 1 and a preform production method with the features of claim 8.

### EFFECT OF THE INVENTION

According to a preform production apparatus of the invention and a preform production method of the invention, particularly in production of a preform having a three-dimensional shape, it is possible to evenly press a reinforcing fiber base material disposed on a stationary mold, and it is also possible to appropriately press the reinforcing fiber base material in a substantially right-angle direction with respect to a surface of the stationary mold or to appropriately apply tension to the reinforcing fiber while shaping the reinforcing fiber base material. Therefore, it is possible to efficiently produce high quality preforms in which the occurrence of wrinkles, zigzagging of fibers and cracking are limited.

### BRIEF DESCRIPTION OF DRAWINGS

Fig. 1 is a view illustrating an example of an embodiment of a preform production apparatus of the invention;
Fig. 2 is a side view illustrating an example of an embodiment of an end effector constituting a part of the preform production apparatus of the invention; incidentally, there is omission of illustration of pressure-contact elements other than a row of pressure-contact elements positioned on the frontmost side;
Fig. 3 is a view illustrating an example of a state of arrangement of the pressure-contact elements in the end effector constituting a part of the preform production apparatus of the invention and obtained when viewed from a holding direction of the pressure-contact elements; an arrow in the drawing represents a proceeding direction of the end effector;
Fig. 4 is a view illustrating another example of the embodiment of the preform production apparatus of the invention;
Fig. 5 is a view illustrating still another example of the embodiment of the preform production apparatus of the invention;
Fig. 6 is a view illustrating still another example of the embodiment of the preform production apparatus of the invention;
Fig. 7 is a top view and a side view illustrating an example of an embodiment of a stationary mold constituting a part of the preform production apparatus of the invention;
Fig. 8 is a front view and a side view illustrating an example of an embodiment of a pressure-contact element that is held by the end effector constituting a part of the preform production apparatus of the invention;
Fig. 9 is a view illustrating an example of a state of arrangement of the pressure-contact elements in the end effector constituting a part of the preform production apparatus of the invention and obtained when viewed from a holding direction of the pressure-contact elements; an arrow in the drawing represents the proceeding direction of the end effector; and
Fig. 10 is a view illustrating an example of an embodiment in which the end effector constituting a part of the preform production apparatus of the invention includes a supplying mechanism of an endless-processed sheet.

### MODE(S) FOR CARRYING OUT THE INVENTION

### <Preform Production Apparatus>

A preform production apparatus (hereinafter, simply referred to as a "production apparatus") of the invention is an apparatus for shaping a reinforcing fiber base material into a specified shape prior to main molding thereof in order to obtain a fiber-reinforced resin molding of a desired shape, in which the reinforcing fiber base material is shaped into the specified shape, and thereby a preform is produced.

In other words, the preform in the invention is produced by shaping the reinforcing fiber base material into the specified shape prior to the main molding thereof in order to obtain the fiber-reinforced resin molding of the desired shape.

The production apparatus of the invention includes a stationary mold with a surface shape corresponding to the specified shape into which the reinforcing fiber base material is shaped, an end effector for pressing the reinforcing fiber base material on a surface of the stationary mold, and a control unit for moving the end effector.

Hereinafter, an aspect of the production apparatus of the invention will be described with reference to the drawings; however, the invention is not limited thereto.

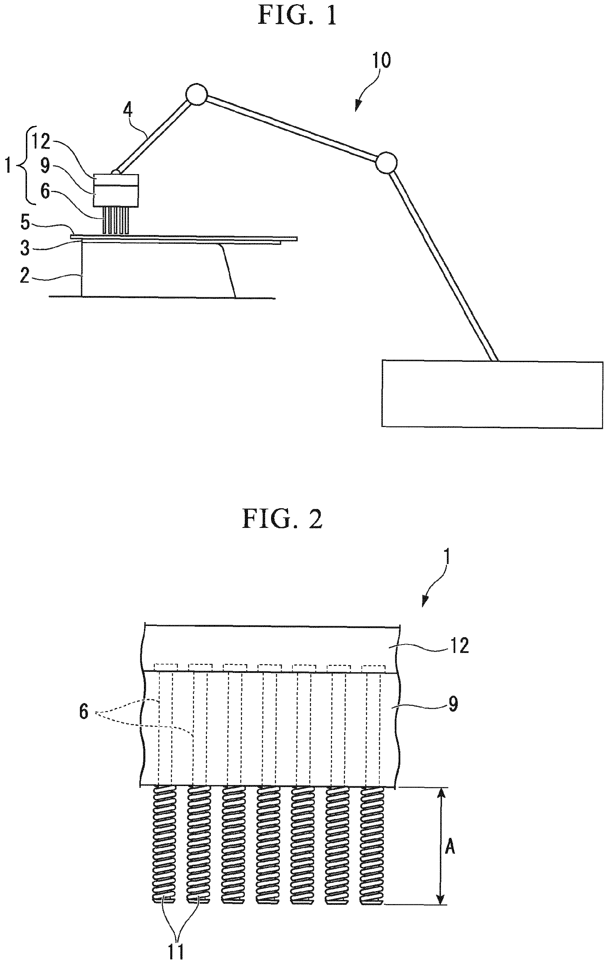

Fig. 1 is a view illustrating an example of an embodiment of a preform production apparatus of the invention.

A preform production apparatus 10 of the embodiment includes a stationary mold 2, an end effector 1 for pressing a reinforcing fiber base material 3 on a surface of the stationary mold 2, and a control unit 4 for moving the end effector 1.

### (Stationary Mold)

The stationary mold has the surface shape corresponding to the specified shape into which the reinforcing fiber base material is shaped.

In other words, the stationary mold has the surface shape corresponding to a shape of a preform, which is a target, the reinforcing fiber base material is disposed on the stationary mold when the preform is produced by using the production apparatus of the invention.

In the production apparatus of the invention, the control unit causes the end effector to press the reinforcing fiber base material on the stationary mold, and thereby the reinforcing fiber base material is shaped. Hence, the stationary mold needs to have sufficient strength so as to withstand pressing of the reinforcing fiber base material by the end effector and also needs to be sufficiently stationary while shaping of the reinforcing fiber base material is performed.

A material of the stationary mold is not particularly limited, and examples thereof include metal and chemical wood. Of the materials, it is preferable to use chemical wood in that wood is not expensive and processing of the wood is easy.

Incidentally, the stationary mold may be movable through conveyance by a single-axis rail or a conveyance belt. In a case where the stationary mold is movable, the shaping of the reinforcing fiber base material is performed, then, it is possible to move the stationary mold before an obtained preform is demolded from the mold, it is possible to convey another stationary mold therein, and it is possible to dispose and shape the next reinforcing fiber base material. This process may be repeated, and thereby a plurality of preforms may be continually produced.

In this case, the production apparatus of the invention may include conveyance means of the stationary mold, and it is preferable that one or both of disposing of the reinforcing fiber base material on the stationary mold and shaping by the end effector are performed by using another stationary mold, in parallel with demolding of the obtained preform. In addition, the stationary mold and the other stationary mold may have the same or different surface shape as or from each other.

### (End Effector)

The end effector has a function of pressing the reinforcing fiber base material disposed on the stationary mold on the surface of the stationary mold and deforming the reinforcing fiber base material.

The reinforcing fiber base material is pressed and deformed on the surface of the stationary mold by the moving end effector. In this manner, it is possible to limit the occurrence of wrinkles, zigzagging of fibers, and cracking of the obtained preform, and it is possible to perform the shaping efficiently in a short time.

The end effector 1 in Fig. 1 includes a pressure-contact element holding portion 9, a plurality of pressure-contact elements 6 which are held by the pressure-contact element holding portion 9 such that each of some pressure-contact elements 6 projects from the pressure-contact element holding portion 9, and a connection portion 12 with the control unit, which is connected with the control unit 4.

Fig. 2 is a side view illustrating an example of an embodiment of the end effector constituting a part of the preform production apparatus of the invention. Similarly to the end effector 1 in Fig. 1, the end effector includes the pressure-contact element holding portion 9, the plurality of pressure-contact elements 6 which are held by the pressure-contact element holding portion 9 such that each of some pressure-contact elements 6 projects from the pressure-contact element holding portion 9, and the connection portion 12 with the control unit, which is connected with the control unit 4, and at least some of the plurality of pressure-contact elements 6 are held by the pressure-contact element holding portion 9 such that a projection length is changeable due to a reaction force from the stationary mold. Incidentally, the projection length means a length of a part represented by A in Fig. 2, here. In addition, in Fig. 2, there is omission of illustration of pressure-contact elements other than a row of pressure-contact elements positioned on the frontmost side.

Specifically, in Fig. 2, at least some pressure-contact elements 6 have respective springs 11 and are capable of changing the projection lengths depending on the reaction force when the pressure-contact elements come into contact with the reinforcing fiber base material and receive the reaction force from the stationary mold. Consequently, the end effector 1 is capable of moving along the surface shape of the stationary mold having a three-dimensional shape with unevenness.

Examples of mechanisms that change the projection length of the pressure-contact element include a mechanism that changes the projection length by the spring as described above, a mechanism that detects a positional relationship between the pressure-contact element and the stationary mold by using a position sensor and controls the projection length, and a mechanism that detects a reaction force applied to the pressure-contact element, by a force sensor, performs air-control or electrical control of a position of the pressure-contact element, and controls the projection length.

Of the mechanisms, it is preferable to employ the mechanism that changes the projection length of the pressure-contact element by the spring in that the mechanism is economically better. It is possible to use a coil spring or a leaf spring as the spring.

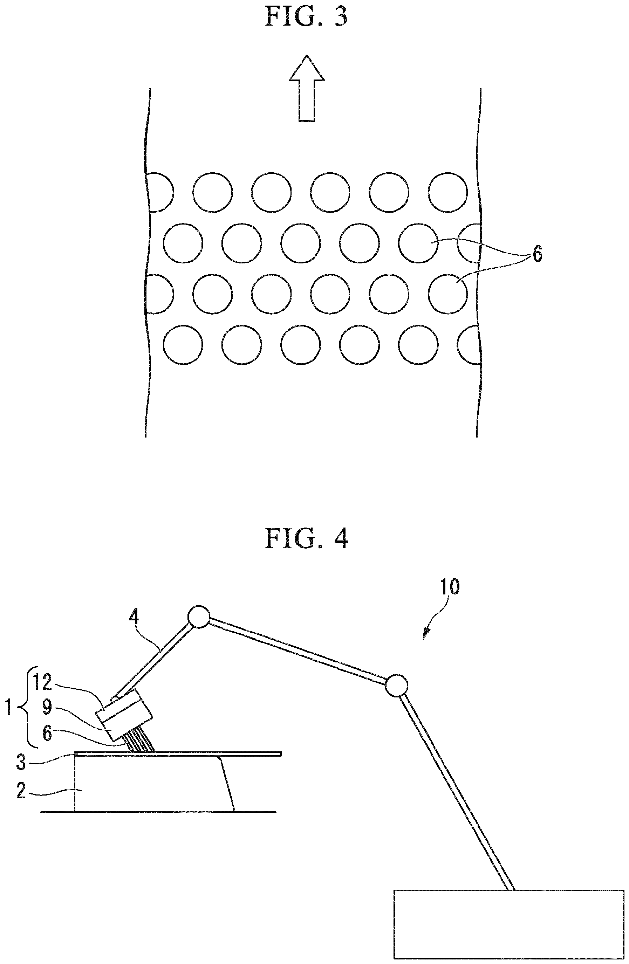

Fig. 3 is a view illustrating an example of a state of arrangement of the pressure-contact elements in the end effector constituting a part of the preform production apparatus of the invention and obtained when viewed from a holding direction of the pressure-contact elements. Incidentally, an arrow in the drawing represents a proceeding direction of the end effector 1.

Adjacent pressure-contact elements 6 have an interval therebetween, and a surface of the pressure-contact element which comes into contact with the stationary mold is uneven; however, the plurality of pressure-contact elements 6 are disposed such that an entire movement plane of the end effector 1, which is projected on the reinforcing fiber base material 3, is practically pressed in a case where the end effector 1 is moved in one direction (proceeding direction) along the surface shape of the stationary mold 2.

In other words, several pressure-contact elements that are positioned in the frontmost row on a side in the proceeding direction of the end effector press the reinforcing fiber base material at intervals in the same direction as the proceeding direction of the end effector. Subsequently, pressure-contact elements positioned in a row on a rear side when viewed from the proceeding direction of the end effector press the reinforcing fiber base material so as to fill the above-described intervals. That is, the pressure-contact elements in the rear row press a part that is not possible to be pressed by the pressure-contact elements in the frontmost row due to the intervals between adjacent pressure-contact elements. The plurality of pressure-contact elements are disposed in the end effector as described above, thereby pressing the entire reinforcing fiber base material in a part through which the end effector has passed, without leaving the above-described intervals after the end effector has passed.

Consequently, it is possible to further limit the occurrence of wrinkles, zigzagging of fibers, and cracking of the obtained preform.

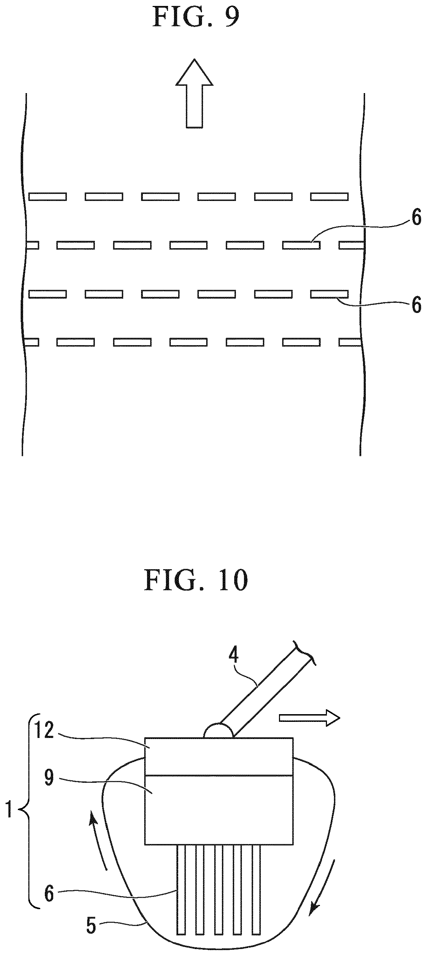

In Fig. 3, the pressure-contact element 6 has a circular distal end shape; however, the distal end shape of the pressure-contact element is not limited to the circular shape and may be a polygonal shape such as a triangular shape or a quadrangular shape as illustrated in Fig. 9 or may be an elliptical shape. In addition, it is preferable that an edge of the distal end part of the pressure-contact element is rounded or chamfered so as not to damage the reinforcing fiber base material or the sheet.

According to the invention, the pressure-contact element has a simple rod shape as illustrated in Fig. 2 and the pressure-contact element slides on the reinforcing fiber base material, when the moving end effector causes the pressure-contact elements to press the reinforcing fiber base material, thereby deforming the reinforcing fiber base material.

The pressure-contact elements may all have the same distal end shape. In addition, it is also possible to use the pressure-contact elements having several types of different distal end shapes simultaneously. In other words, among the plurality of pressure-contact elements, some pressure-contact elements may have a distal end shape which is different from a distal end shape of the other pressure-contact elements.

For example, in order for the pressure-contact elements to move along a fine uneven portion included in the surface shape of the stationary mold, it is possible to decrease a diameter of the pressure-contact elements in an outer peripheral portion of the end effector and decrease pitches therebetween, and it is possible to increase a diameter of the pressure-contact elements in the center portion of the end effector and increase pitches therebetween.

### (Control Unit)

The control unit has a function of moving the end effector. In the preform production apparatus in Fig. 1, the control unit 4 is connected to the end effector 1 so as to move the end effector 1 such that the end effector 1 presses the reinforcing fiber base material 3 on the surface of the stationary mold 2.

Consequently, the reinforcing fiber base material is shaped as the preform of a specified shape.

In addition, the control unit may have a mechanism that controls contact pressure of the end effector to the stationary mold in order to improve accuracy of the shaping.

Incidentally, it is possible to control the contact pressure of the end effector to the stationary mold by the control unit; however, it is possible to control the contact pressure by adjusting spring tension or a compression length of the spring used in the pressure-contact element, and the contact pressure may be controlled by using any method or may be controlled by a combination of a plurality of methods.

As illustrated in Fig. 4, the control unit may have a mechanism that tilts the end effector 1 such that the projection length of the pressure-contact elements 6 disposed on a further rear side in the proceeding direction of the end effector 1 decreases more when the end effector 1 is moved to press the reinforcing fiber base material 3 on the surface of the stationary mold 2. Incidentally, in Fig. 4, a direction from left to right on the drawing is the proceeding direction of the end effector 1.

Consequently, when the end effector is moved, it is possible to apply, in an axial direction of the pressure-contact element, a total force of the reaction force and friction resistance when the stationary mold is pressed, and thus it is possible to smoothly change the projection length of the pressure-contact element. Therefore, since it is possible to more increase smoothness of the obtained preform, and further there is no need to increase bending stiffness of the pressure-contact element more than a general level, the mechanism is good in terms of costs of the apparatus.

It is possible to determine a tilting angle of the end effector through an appropriate study, depending on a material of the pressure-contact element, a friction coefficient between the pressure-contact element and the reinforcing fiber base material, a friction coefficient between the pressure-contact element and the sheet, contact pressure of the end effector, or the like.

For example, it is possible to use a six-axis robot as the control unit; however, the control unit is not limited thereto, and it is possible to use a single body configured of a single-axis drive rail and a rotating base or a combined body thereof, in addition to a SCARA robot, a parallel link robot, or a seven-axis robot.

When a device that can be used as the control unit, it is necessary to take economic efficiency, accuracy, and compatibility with shape. However, of the examples of the control unit, it is preferable to use the six-axis or seven-axis robot because it is possible to move the end effector such that the reinforcing fiber base material is pressed on the surface of the stationary mold along the surface shape of the stationary mold having the three-dimensional shape with unevenness.

### (Other Configurations)

When the reinforcing fiber base material is shaped, it is preferable to heat and soften the reinforcing fiber base material at a curing temperature or lower or a softening temperature or higher of a matrix resin composition or a thermal adhesive binder constituting the reinforcing fiber base material to be described below.

As a heating method of the reinforcing fiber base material, a method of heating the reinforcing fiber base material in advance before the reinforcing fiber base material is disposed on the stationary mold or a method of providing a heating mechanism for heating the reinforcing fiber base material on the stationary mold in the production apparatus of the invention and heating the reinforcing fiber base material is considered.

In addition, in the production apparatus of the invention, the end effector may include a heating mechanism for heating at least some of the plurality of pressure-contact elements. As such an aspect, it is possible to provide an aspect in which the pressure-contact element holding portion is provided with a heating mechanism for heating the pressure-contact elements, an aspect in which the pressure-contact element is provided with a heating mechanism for heating the pressure-contact element itself, or the like. According to the aspects, at least some pressure-contact elements are heated, and thereby it is possible to heat a pressed part of the reinforcing fiber base material selectively.

In addition, the production apparatus of the invention may include a hot-air blowing device for heating the reinforcing fiber base material.

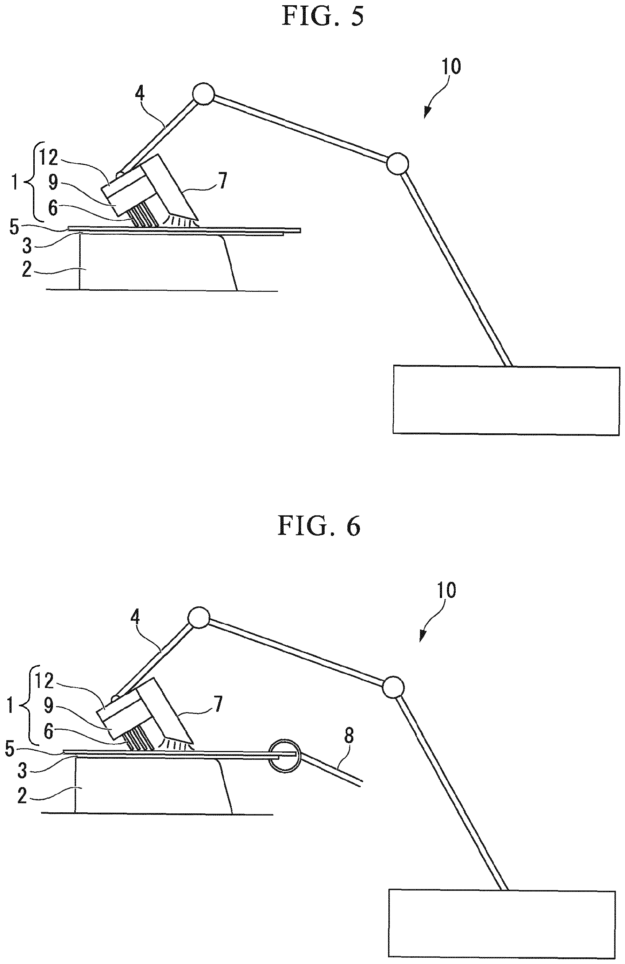

The hot-air blowing device may be controlled by the control unit that controls the end effector or may be controlled by another control mechanism. This is preferable because the hot-air blowing device is controlled to move in association with the movement of the end effector, and thereby the hot-air blowing device is capable of heating a pressed part of the reinforcing fiber base material. For example, as illustrated in Fig. 5, a hot-air blowing device 7 for heating the reinforcing fiber base material 3 is provided in the end effector 1, and thereby it is possible to heat a range that is pressed by the pressure-contact element 6.

In addition, the production apparatus of the invention may include a heat-ray irradiation device for heating the reinforcing fiber base material.

The heat-ray irradiation device may be controlled by the control unit that controls the end effector or may be controlled by another control mechanism. This is preferable because the heat-ray irradiation device is controlled to move in association with the movement of the end effector, and thereby the heat-ray irradiation device is capable of heating a pressed part of the reinforcing fiber base material. For example, the heat-ray irradiation device for heating the reinforcing fiber base material is provided in the end effector, and thereby it is possible to heat a range that is pressed by the pressure-contact element.

The heating method of the reinforcing fiber base material can be appropriately selected from the above-described methods as necessary and, in the production apparatus of the invention, of the methods, it is preferable to employ the method in which the hot-air blowing device or the heat-ray irradiation device is provided in the end effector to heat the reinforcing fiber base material because it is possible to easily control the heated part of the reinforcing fiber base material and it is possible to heat only a part, which needs to be softened, selectively in the shaping of the reinforcing fiber base material.

In addition, the production apparatus of the invention can include a grip device that grips the reinforcing fiber base material and a tension applying unit for applying tension to the reinforcing fiber base material, the tension applying unit being configured of a grip device control mechanism that controls the grip device. For example, Fig. 6 illustrates, as a part of the tension applying unit, a grip device 8 that grips the reinforcing fiber base material 3 so as to apply tension to the reinforcing fiber base material 3.

When the shaping is performed while the reinforcing fiber base material is gripped such that the tension is applied, it is possible to extend the reinforcing fiber base material during the softening of the matrix resin composition or the thermal adhesive binder described above, and thus it is possible to further limit the occurrence of wrinkles, zigzagging of fibers, and cracking of the obtained preform.

The tension applying unit may be controlled by a multi-axis robot. It is preferable that the multi-axis robot grips a plurality of positions of the reinforcing fiber base material, and thereby it is possible to control the tension to the reinforcing fiber base material such that the tension is applied to the reinforcing fiber base material during the shaping in the optimum condition. In addition, a configuration may be employed, in which the reinforcing fiber base material is gripped with a string, a wire, or the like so as to be tensioned such that specified tension is applied in a specified direction of the reinforcing fiber base material.

The grip device 8 is not particularly limited, and it is possible to preferably use various types of hands, which are used by being attached to the multi-axis robot, such as a pinching device using magnets, in addition to an air chuck.

In addition, the tension applying unit may have a configuration in which it is possible to change a gripping position on the reinforcing fiber base material by the tension applying unit so as to apply the tension to the reinforcing fiber base material such that the optimal tension is applied to the reinforcing fiber base material even during the shaping of the reinforcing fiber base material, depending on a positional relationship between the end effector and the reinforcing fiber base material.

In addition, the production apparatus of the invention may include one or both mechanisms of a mechanism that supplies a sheet to be described below between the reinforcing fiber base material and the end effector and a mechanism that collects a sheet disposed between the reinforcing fiber base material and the end effector.

Incidentally, the mechanisms may be controlled by the control unit that controls the end effector or may be controlled by another control mechanism. The mechanisms are controlled to move in association with the movement of the end effector, and thereby it is possible to easily supply the sheet only to the pressed part of the reinforcing fiber base material and the periphery thereof or to easily collect the sheet in the pressed part of the reinforcing fiber base material and the periphery of the pressed part.

For example, the mechanisms are provided in the end effector, and thereby it is possible to easily supply the sheet on the reinforcing fiber base material of the pressed part in association with the movement of the end effector and to easily collect the sheet on the reinforcing fiber base material of the pressed part in association with the movement of the end effector.

It is preferable that the sheet is supplied or the sheet is collected only to or from the pressed part of the reinforcing fiber base material and the periphery of the pressed part, because there is no need to prepare a sheet having a large area corresponding to a size of the reinforcing fiber base material. In this case, there is also no need to supply or collect a sheet having the large area, and thus it is easier to supply or collect the sheet.

### <Preform Production Method>

A preform production method (hereinafter, simply referred to as a "production method") of the invention is a method for shaping a reinforcing fiber base material into a specified shape prior to main molding thereof in order to obtain a fiber-reinforced resin molding of a desired shape, in which the reinforcing fiber base material is shaped into the specified shape, and thereby a preform is produced.

The production method of the invention includes disposing the reinforcing fiber base material on the stationary mold with the surface shape corresponding to the specified shape, into which the reinforcing fiber base material is shaped, and shaping the reinforcing fiber base material by pressing the reinforcing fiber base material on the surface of the stationary mold by the end effector while the end effector is moved.

The production method of the invention can be performed by using the production apparatus of the invention. In addition, the stationary mold, the end effector, or the like which is used in the production method of the invention are the same as the stationary mold, the end effector, or the like in the production apparatus of the invention.

### (Disposition of Reinforcing Fiber Base Material on Stationary Mold)

In the production method of the invention, the reinforcing fiber base material that is shaped into the specified shape is disposed on the stationary mold having the surface shape corresponding to the specified shape.

The reinforcing fiber base material may be disposed on the stationary mold by human hand or a machine such as an automatic conveyance device.

### [Reinforcing Fiber Base Material]

A sheet-shaped prepreg obtained by impregnating reinforcing fibers with a matrix resin composition is used as the reinforcing fiber base material used in the production method of the invention.

Examples of the sheet-shaped prepreg includes an UD prepreg in which the reinforcing fibers are aligned in one direction, and a cross prepreg in which reinforcing fibers arranged in a plurality of directions are woven, and particularly the UD prepreg is preferable as the sheet-shaped prepreg. In addition, it is more preferable to use a stacked body in which a plurality of UD prepregs are stacked to have different fiber directions from each other.

In this case, according to the production method of the invention, it is possible to produce a preform for compression molding of the prepreg.

A thickness of the reinforcing fiber base material is preferably 0.1 mm to 5.0 mm and more preferably 0.2 mm to 2.0 mm. When the thickness of the reinforcing fiber base material is equal to or larger than the lower limit value, the thickness is not too thin, and thus it is easy to maintain a shape of the obtained preform or to suppress cracking. In addition, when the thickness of the reinforcing fiber base material is equal to or smaller than the upper limit value, the thickness is not too thick, thus, it is easy to perform the shaping, and it is easy to suppress the easy occurrence of wrinkles, zigzagging of fibers, and cracking in the obtained preform.

In addition, in a case where a stacked body in which a plurality of prepregs are stacked to have different fiber directions from each other, the thickness of the prepreg is preferably 0.03 to 1 mm and more preferably 0.1 to 0.5 mm.

The thickness of the reinforcing fiber base material or the prepreg can be measured by an external micrometer or a paper micrometer.

In addition, regarding a size of the reinforcing fiber base material used in the invention, it is possible to exemplify a sheet-shaped prepreg having a width of 0. 1 to 2 m and a length of 0.1 to 200 m.

Examples of the reinforcing fibers constituting the reinforcing fiber base material used in the invention include a carbon fiber, a glass fiber, an aramid fiber, a high-strength polyester fiber, a boron fiber, an alumina fiber, a silicon nitride fiber, a nylon fiber, or the like. Of the fibers, it is preferable to use the carbon fiber because the carbon fiber has good specific strength and specific elasticity.

As an aspect of the invention, an amount of the reinforcing fiber in the reinforcing fiber base material is 50 to 80 mass% and preferably 65 to 75 mass% in 100 mass% of the reinforcing fiber base material.

In addition, it is possible to use a thermosetting resin or a thermoplastic resin as a matrix resin constituting the reinforcing fiber base material used in the invention. Only the thermosetting resin or only the thermoplastic resin may be used as the resin, or both of the thermosetting resin and the thermoplastic resin may be used as the resin. However, it is preferable to use the thermosetting resin because the thermosetting resin enables the obtained preform to have a good external appearance and good productivity to be achieved.

Examples of the thermosetting resins include unsaturated polyester resin, epoxy resin, vinyl ester resin, phenol resin, epoxy acrylate resin, urethane acrylate resin, phenoxy resin, alkyd resin, urethane resin, maleimide resin, cyanate resin, or the like.

The thermosetting resins may be individually used, or a combination of two or more types thereof may be used.

Examples of the thermoplastic resins include polyolefin resin, polyamide resin, polyester resin, polyphenylene sulfide resin, polyether ketone resin, polyether sulfone resin, aromatic polyamide resin, or the like.

The thermoplastic resins may be individually used, or a combination of two more types thereof may be used.

Incidentally, the reinforcing fiber base material may be obtained by containing various types of additives such as a curing agent, an internal mold release agent, or a defoaming agent which is suitable for the matrix resin that is used.

It is possible to use, as the reinforcing fiber base material used in the production method of the invention, a fabric and a non-crimped fabric of the reinforcing fibers and an object obtained by fixing a stacked body thereof between layers with the thermal adhesive binder.

In this case, according to the production method of the invention, it is possible to produce a preform for resin transfer molding (RTM).

### (Shaping of Reinforcing Fiber Base Material by Using End Effector)

In the production method of the invention, the reinforcing fiber base material disposed on the stationary mold is pressed and shaped on the surface of the stationary mold by the moving end effector.

It is preferable that the shaping of the reinforcing fiber base material is performed in a state in which the sheet is disposed between the reinforcing fiber base material and the end effector.

When the end effector is moved on the reinforcing fiber base material, a problem of disturbing orientations of the reinforcing fibers in the reinforcing fiber base material are disturbed depending on the material or the contact pressure of the pressure-contact element or an uneven trace remaining in the surface thereof arises, in some cases. In order to limit the problem, as illustrated in Figs. 1,5, and 6, it is preferable that the reinforcing fiber base material 3 is shaped in a state in which a sheet 5 is disposed between the reinforcing fiber base material 3 and the end effector 1.

### [Sheet]

A material of the sheet is not particularly limited, but it is preferable to use a thermoplastic resin film made of polyethylene, polyvinyl chloride, polyethylene terephthalate, polytetrafluoroethylene, or the like, in that the substances have good flexibility and durability under a shaping condition of the reinforcing fiber base material.

A thickness of the sheet is different depending on a sheet material, is not particularly limited as long as it is a range that flexibility of the sheet can be obtained, and is a range of 15 µm to 200 µm, for example. A common thermoplastic resin has a thickness in a range of 15 µm to 200 µm and is preferably used because the thermoplastic resin is good for limiting the occurrence of wrinkles, zigzagging of fibers, and cracking of the obtained preform. In addition, the thickness is more preferably in a range of 25 µm to 100 µm because the flexibility and the durability of the sheet are compatible in the range.

Further, it is also possible to form a specified pattern of slits in the sheet and shape the reinforcing fiber base material. Consequently, it is possible to apply more complex shape to the shaping of the reinforcing fiber base material without influencing a deformation limit of the sheet.

A slit pattern, by which it is possible to appropriately increase the deformation limit of the sheet, may be used as the specified pattern of slits, and an example of the slit includes a slit formed in a direction that is substantially perpendicular to an extending direction during the shaping of the reinforcing fiber base material. Consequently, it is possible to deform the sheet without a limit to the shaping of the reinforcing fiber base material.

Pitches between the slits are different depending on hardness or ease of change of the sheet. In other words, it is preferable that the pitches increase when the sheet is soft and is easily deformed, and the pitches decrease when the sheet is hard and is not deformed easily. When the slit is unnecessarily elongated, an intra-sheet distance is likely to significantly increase, and thus there is a high possibility that the reinforcing fiber base material and the end effector will be brought into direct contact with each other without the sheet sandwiched therebetween. Hence, it is preferable that a length of the slit is necessary and sufficient, and it is possible to set the length of the slit appropriately by trial and error, depending on the shape of the reinforcing fiber base material that is shaped.

The sheet may be disposed to cover the entire reinforcing fiber base material and may be collected after the shaping of the entire reinforcing fiber base material is completed; however, after the sheet may be continuously supplied partially only to the pressed part of the reinforcing fiber base material and the periphery of the pressed part, and the sheet of a position thereof may be continuously collected after the shaping of the position thereof is completed, in association with proceeding of the end effector.

The sheet is continuously supplied and continuously collected in association with the proceeding of the end effector. Consequently, there is no need to prepare the sheet having substantially the same area as that of the reinforcing fiber base material, and thus it is also possible to avoid complication of supplying and collecting of the sheet having a large area.

In addition, the sheet can be endless-processed and can have a circulating structure. As illustrated in Fig. 10, an example in which the sheet is endless-processed and has the circulating structure can include an aspect in which the sheet 5 subjected processing into a ring shape is provided to the end effector 1 so as to cover the plurality of pressure-contact elements 6 such that the sheet is always disposed between the reinforcing fiber base material 3 and the end effector 1 when the end effector 1 presses the reinforcing fiber base material 3.

The sheet provided in the end effector is supplied on the reinforcing fiber base material of the pressed part in association with the movement of the end effector and is collected from the reinforcing fiber base material of the pressed part in association with the movement of the end effector.

The endless-processed sheet provided in the end effector may be sent out or may not be sent out in association with the movement of the end effector.

In a case where the endless-processed sheet is sent out in association with the movement of the end effector, it is preferable to send out the ring-shaped sheet at a speed at which there is no slippage between the reinforcing fiber base material and the sheet in a viewpoint of limiting the occurrence of wrinkles, zigzagging of fibers, and the cracking.

In a case where the endless-processed sheet is not sent out in association with the movement of the end effector, the ring-shaped sheet may be sent out and the shaping of the reinforcing fiber base material having a certain area in an unused and sent-out sheet part may be repeated.

### (Other Aspects)

Incidentally, in a case where the stationary mold is movable and replaceable through conveyance by the single-axis rail or the conveyance belt, it is possible to perform, at a chosen position, the preform production method of the invention includes a step of disposing the reinforcing fiber base material on the stationary mold, a step of shaping the reinforcing fiber base material by using the end effector, and a step of demolding of the obtained preform following the steps described above. In this case, the steps continuously proceed simultaneously, and thereby it is possible to improve the productivity.

For example, in a case where a plurality of preforms are continuously produced, it is possible to move the stationary mold, on which the preform produced by the preform production method of the invention is placed, it is possible to install another stationary mold in a place where the moved stationary mold is placed, and it is possible to repeat the preform production method of the invention by using the other stationary mold.

In other words, following the production method of the invention, it is possible to move the stationary mold (also referred to as a "first stationary mold"), on which the obtained preform is placed, it is possible to install the other stationary mold (also referred to as a "second stationary mold") in the place in which the first stationary mold is stationary, it is possible to dispose the reinforcing fiber base material on the second stationary mold at the same time when the preform placed on the first stationary mold (the demolding including moving of the first stationary mold, cooling of the obtained preform, and releasing the obtained preform from the first stationary mold) is demolded or it is possible to dispose the reinforcing fiber base material on the second stationary mold, and it is possible to shape the reinforcing fiber base material by pressing the reinforcing fiber base material on the surface of the second stationary mold by the end effector while moving the end effector.

In addition, as long as the stationary mold is movable through conveyance, the first stationary mold and the second stationary mold described above do not need to have the same shape, it is possible to use the first stationary mold and the second stationary mold having different shapes from each other, and thus it is possible to perform so-called mixed flow production.

### EXAMPLES

Hereinafter, the invention will be more specifically described with Examples; however, the invention is not limited to Examples.

### (Example 1)

A prepreg (product number: TR350G250S, carbon fiber weight: 250 g/m², total weight: 373 g/m²) manufactured by Mitsubishi Chemical Corporation was pattern-cut to have a specified shape, stacking at 0°/90° was performed, and a reinforcing fiber base material was obtained.

The shaping of the reinforcing fiber base material was performed in the configuration described in Fig. 6 by using the obtained reinforcing fiber base material.

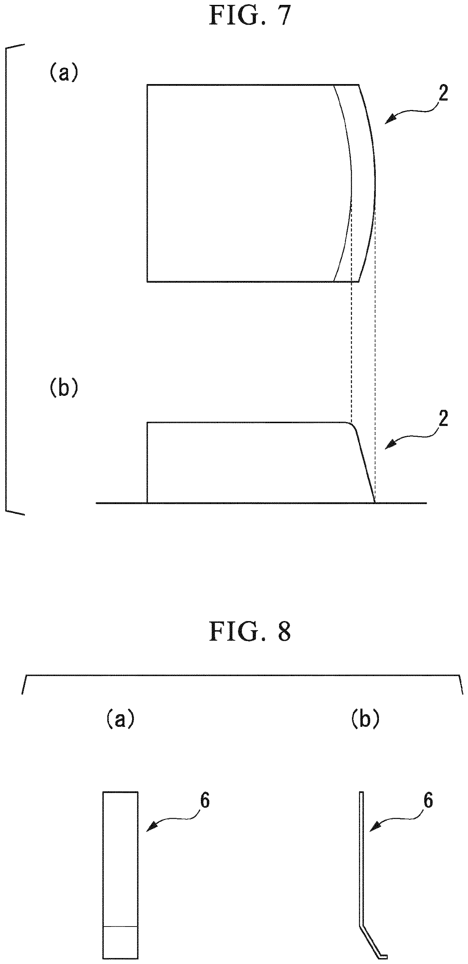

Here, a stationary mold having a shape described in Fig. 7 was used as the stationary mold. In addition, a polyester film (DIAFOIL (registered trademark) MRF-75) manufactured by Mitsubishi Plastics, Inc. was used as the sheet, and the sheet was disposed in the sheet part in which the sheet was disposed in an upper curvature part of the stationary mold in Fig. 7, the sheet having the slits which were formed at a pitch of 20 mm so as to cover more than the upper curvature part of the stationary mold from an end portion of the sheet on a right side.

A six-axis robot (MORTMAN-20) manufactured by YASKAWA Electric Corporation was used as the control unit, the end effector was connected to a hot-air generating outlet with a duct from a hot-air generator, the production apparatus was controlled such that the pressure-contact element moves while performing the pressing along the surface shape of the stationary mold, the reinforcing fiber base material (a pattern-cut prepreg) was shaped, and the preform was produced. At that time, the end portion of the reinforcing fiber base material was held by the grip device, and thereby the tension was applied in the direction along the surface shape of the stationary mold. In this state, the grip position of the grip device was changed in a link with the movement of the end effector, and thus the tension was applied to the reinforcing fiber base material.

As a result, it was possible to obtain a high quality preform having a good external appearance without wrinkles, zigzagging of fibers, or cracking. The obtained preform is subjected to main molding by a high-pressure press machine, and thereby a high quality fiber-reinforced resin molding is obtained.

### (Example 2)

The end effector, in which the pressure-contact elements having a leaf spring shape as described in Fig. 8 are arranged as described in Fig. 9, was used, and a preform was produced in the same conditions as those in Example 1.

As a result, it was possible to obtain a high quality preform having a good external appearance without wrinkles, zigzagging of fibers, or cracking. The obtained preform is subjected to main molding by the high-pressure press machine, and thereby a high quality fiber-reinforced resin molding is obtained.

### INDUSTRIAL APPLICABILITY

According to a production apparatus and a production method of the invention, a high quality preform having a complex three-dimensional shape with unevenness, large curvature, or the like in which the occurrence of wrinkles, zigzagging of fibers and cracking are limited can be efficiently produced.

### EXPLANATIONS OF LETTERS OR NUMERALS

- 1: END EFFECTOR
- 10: PRODUCTION APPARATUS
- 11: SPRING
- 12: CONNECTION PORTION TO CONTROL UNIT
- 2: STATIONARY MOLD
- 3: REINFORCING FIBER BASE MATERIAL
- 4: CONTROL UNIT
- 5: SHEET
- 6: PRESSURE-CONTACT ELEMENT
- 7: HOT-AIR BLOWING DEVICE
- 8: GRIP DEVICE
- 9: PRESSURE-CONTACT ELEMENT HOLDING PORTION
- A: PROJECTION LENGTH (OF PRESSURE-CONTACT ELEMENT)

## Claims

1. A preform production apparatus (10) for shaping a reinforcing fiber base material into a specified shape prior to main molding thereof in order to obtain a fiber-reinforced resin molding of a desired shape, the apparatus comprising:
a stationary mold (2) with a surface shape corresponding to the specified shape;
an end effector (1) for pressing the reinforcing fiber base material on a surface of the stationary mold (2); and
a control unit for moving the end effector (1),
wherein the end effector (1) includes a pressure-contact element holding portion (9) and a plurality of pressure-contact elements (6) which are held by the pressure-contact element holding portion (9) such that each of some pressure-contact elements (6) projects from the pressure-contact element holding portion (9),
the pressure-contact elements (6) have a rod shape, and
at least some of the plurality of pressure-contact elements (6) are held by the pressure-contact element holding portion (9) such that a projection length is changeable due to a reaction force from the stationary mold (2).

2. The preform production apparatus according to claim 1,
wherein the plurality of pressure-contact elements are disposed in the end effector such that an entire movement plane of the end effector, which is projected on the reinforcing fiber base material, is practically pressed when the end effector is moved in one direction along the surface shape of the stationary mold.

3. The preform production apparatus according to claim 1 or 2,
wherein the control unit has a mechanism that controls contact pressure of the end effector to the stationary mold.

4. The preform production apparatus according to any of claims 1 to 3,
wherein the control unit has a mechanism that tilts the end effector such that the projection length of pressure-contact elements disposed on a further rear side in a proceeding direction of the end effector decreases more when the end effector is moved.

5. The preform production apparatus according to any one of claims 1 to 4,
wherein, among the plurality of pressure-contact elements, some pressure-contact elements have a distal end shape which is different from a distal end shape of the other pressure-contact elements.

6. The preform production apparatus according to any one of claims 1 to 5,
wherein the end effector has a heating mechanism for heating at least some of the plurality of pressure-contact elements.

7. The preform production apparatus according to any one of claims 1 to 6,
wherein the end effector includes one or both of a mechanism that supplies a sheet between the reinforcing fiber base material and the end effector and a mechanism that collects a sheet disposed between the reinforcing fiber base material and the end effector.

8. A preform production method for shaping a reinforcing fiber base material into a specified shape prior to main molding thereof in order to obtain a fiber-reinforced resin molding of a desired shape, the method comprising:
disposing the reinforcing fiber base material on a stationary mold with a surface shape corresponding to the specified shape; and
shaping the reinforcing fiber base material by pressing the reinforcing fiber base material on a surface of the stationary mold by an end effector (1) while the end effector is moved,
wherein the end effector (1) includes a pressure-contact element holding portion (9) and a plurality of pressure-contact elements (6) which are held by the pressure-contact element holding portion (9) such that each of some pressure-contact elements (6) projects from the pressure-contact element holding portion (9),
the pressure-contact elements (6) have a rod shape, and
at least some of the plurality of pressure-contact elements (6) are held by the pressure-contact element holding portion (9) such that a projection length is changeable due to a reaction force from the stationary mold (2).

9. The preform production method according to claim 8,
wherein the reinforcing fiber base material is shaped in a state in which a sheet is disposed between the reinforcing fiber base material and the end effector.

10. The preform production method according to claim 9,
wherein the sheet is a thermoplastic resin film.

11. The preform production method according to claim 9 or 10,
wherein the sheet has a thickness in a range of 15 to 200 µm.

12. The preform production method according to any one of claims 9 to 11,
wherein a sheet having a slit is used as the sheet.

13. The preform production method according to any one of claims 9 to 12,
wherein the sheet is endless-processed.

## Patentansprüche

1. Vorformlingerzeugungseinrichtung (10) zum Formen eines verstärkenden Faserbasismaterials in eine spezifizierte Form vor deren Hauptformen, um eine Abformung aus faserverstärktem Harz mit einer gewünschten Form zu erhalten, wobei die Einrichtung umfasst:
eine stationäre Form (2) mit einer Oberflächenform, die der spezifizierten Form entspricht;
einen Endeffektor (1) zum Pressen des verstärkenden Faserbasismaterials auf einer Oberfläche der stationären Form (2); und
eine Steuereinheit zum Bewegen des Endeffektors (1),
wobei der Endeffektor (1) einen Druckkontaktelementhalteabschnitt (9) und eine Vielzahl von Druckkontaktelementen (6) beinhaltet, die von dem Druckkontaktelementhalteabschnitt (9) derart gehalten werden, dass jedes einiger Druckkontaktelemente (6) von dem Druckkontaktelementhalteabschnitt (9) vorragt,
die Druckkontaktelemente (6) eine Stangenform aufweisen, und
mindestens einige der Vielzahl von Druckkontaktelementen (6) von dem Druckkontaktelementhalteabschnitt (9) derart gehalten werden, dass eine Vorsprunglänge aufgrund einer Reaktionskraft von der stationären Form (2) veränderbar ist.

2. Vorformlingerzeugungseinrichtung nach Anspruch 1,
wobei die Vielzahl von Druckkontaktelementen in dem Endeffektor derart angeordnet ist, dass eine gesamte Bewegungsebene des Endeffektors, die auf das verstärkende Faserbasismaterial projiziert ist, praktisch gepresst wird, wenn der Endeffektor in einer Richtung entlang der Oberflächenform der stationären Form bewegt wird.

3. Vorformlingerzeugungseinrichtung nach Anspruch 1 oder 2,
wobei die Steuereinheit einen Mechanismus aufweist, der Kontaktdruck des Endeffektors zu der stationären Form steuert.

4. Vorformlingerzeugungseinrichtung nach einem der Ansprüche 1 bis 3,
wobei die Steuereinheit einen Mechanismus aufweist, der den Endeffektor derart kippt, dass die Projektionslänge der Druckkontaktelemente, die auf einer weiteren Rückseite in einer Vorlaufrichtung des Endeffektors angeordnet sind, stärker abnimmt, wenn der Endeffektor bewegt wird.

5. Vorformlingerzeugungseinrichtung nach einem der Ansprüche 1 bis 4,
wobei unter der Vielzahl von Druckkontaktelementen einige Druckkontaktelemente eine distale Endform aufweisen, die von einer distalen Endform der anderen Druckkontaktelemente unterschiedlich ist.

6. Vorformlingerzeugungseinrichtung nach einem der Ansprüche 1 bis 5,
wobei der Endeffektor einen Heizmechanismus zum Heizen mindestens einiger der Vielzahl von Druckkontaktelementen aufweist.

7. Vorformlingerzeugungseinrichtung nach einem der Ansprüche 1 bis 6,
wobei der Endeffektor einen oder beide eines Mechanismus, der einen Bogen zwischen das verstärkende Faserbasismaterial und den Endeffektor zuführt, und eines Mechanismus, der einen Bogen einsammelt, der zwischen dem verstärkenden Faserbasismaterial und dem Endeffektor angeordnet ist, beinhaltet.

8. Vorformlingerzeugungsverfahren zum Formen eines verstärkenden Faserbasismaterials in eine spezifizierte Form vor deren Hauptformen, um eine Abformung aus faserverstärktem Harz mit einer gewünschten Form zu erhalten, wobei das Verfahren umfasst:
Anordnen des verstärkenden Faserbasismaterials auf einer stationären Form mit einer Oberflächenform, die der spezifizierten Form entspricht; und
Formen des verstärkenden Faserbasismaterials durch Pressen des verstärkenden Faserbasismaterials auf einer Oberfläche der stationären Form durch einen Endeffektor (1), während der Endeffektor bewegt wird,
wobei der Endeffektor (1) einen Druckkontaktelementhalteabschnitt (9) und eine Vielzahl von Druckkontaktelementen (6) beinhaltet, die von dem Druckkontaktelementhalteabschnitt (9) derart gehalten werden, dass jedes einiger Druckkontaktelemente (6) von dem Druckkontaktelementhalteabschnitt (9) vorragt,
die Druckkontaktelemente (6) eine Stangenform aufweisen, und
mindestens einige der Vielzahl von Druckkontaktelementen (6) von dem Druckkontaktelementhalteabschnitt (9) derart gehalten werden, dass eine Vorsprunglänge aufgrund einer Reaktionskraft von der stationären Form (2) veränderbar ist.

9. Vorformlingerzeugungsverfahren nach Anspruch 8,
wobei das verstärkende Faserbasismaterial in einem Zustand geformt wird, in dem ein Bogen zwischen dem verstärkenden Faserbasismaterial und dem Endeffektor angeordnet ist.

10. Vorformlingerzeugungsverfahren nach Anspruch 9,
wobei der Bogen eine Thermoplast-Harzfolie ist.

11. Vorformlingerzeugungsverfahren nach Anspruch 9 oder 10,
wobei der Bogen eine Dicke in einem Bereich von 15 bis 200 µm aufweist.

12. Vorformlingerzeugungsverfahren nach einem der Ansprüche 9 bis 11,
wobei ein Bogen, der einen Schlitz aufweist, als der Bogen verwendet wird.

13. Vorformlingerzeugungsverfahren nach einem der Ansprüche 9 bis 12,
wobei der Bogen endlosverarbeitet wird.

## Revendications

1. Appareil de production de préforme (10) permettant de donner à un matériau de base en fibres de renforcement une forme spécifiée avant un moulage principal de celui-ci afin d'obtenir un moulage de résine renforcée de fibres d'une forme souhaitée, l'appareil comprenant :
un moule fixe (2) avec une forme de surface correspondant à la forme spécifiée ;
un effecteur terminal (1) permettant de presser le matériau de base en fibres de renforcement sur une surface du moule fixe (2) ; et
une unité de commande permettant de déplacer l'effecteur terminal (1),
dans lequel l'effecteur terminal (1) inclut une partie de maintien d'éléments de contact à pression (9) et une pluralité d'éléments de contact à pression (6) qui sont maintenus par la partie de maintien d'éléments de contact à pression (9) de sorte que chacun de certains éléments de contact à pression (6) fasse saillie à partir de la partie de maintien d'éléments de contact à pression (9),
les éléments de contact à pression (6) présentent une forme de tige, et
au moins certains de la pluralité d'éléments de contact à pression (6) sont maintenus par la partie de maintien d'éléments de contact à pression (9) de sorte qu'une longueur de saillie puisse être changée en raison d'une force de réaction à partir du moule fixe (2).

2. Appareil de production de préforme selon la revendication 1,
dans lequel la pluralité d'éléments de contact à pression sont disposés dans l'effecteur terminal de sorte qu'un plan de déplacement entier de l'effecteur terminal, qui fait saillie sur le matériau de base en fibres de renforcement, soit pressé de manière pratique lorsque l'effecteur terminal est déplacé dans une direction le long de la forme de surface du moule fixe.

3. Appareil de production de préforme selon la revendication 1 ou 2,
dans lequel l'unité de commande présente un mécanisme qui commande une pression de contact de l'effecteur terminal sur le moule fixe.

4. Appareil de production de préforme selon l'une quelconque des revendications 1 à 3,
dans lequel l'unité de commande présente un mécanisme qui incline l'effecteur terminal de sorte que la longueur de saillie d'éléments de contact à pression disposés sur un côté plus en arrière dans une direction d'avancée de l'effecteur terminal diminue davantage lorsque l'effecteur terminal est déplacé.

5. Appareil de production de préforme selon l'une quelconque des revendications 1 à 4,
dans lequel, parmi la pluralité d'éléments de contact à pression, certains éléments de contact à pression présentent une forme d'extrémité distale qui est différente d'une forme d'extrémité distale des autres éléments de contact à pression.

6. Appareil de production de préforme selon l'une quelconque des revendications 1 à 5,
dans lequel l'effecteur terminal présente un mécanisme de chauffage permettant de chauffer au moins certains de la pluralité d'éléments de contact à pression.

7. Appareil de production de préforme selon l'une quelconque des revendications 1 à 6,
dans lequel l'effecteur terminal inclut un ou les deux d'un mécanisme qui fournit une feuille entre le matériau de base en fibres de renforcement et l'effecteur terminal et un mécanisme qui collecte une feuille disposée entre le matériau de base en fibres de renforcement et l'effecteur terminal.

8. Procédé de production de préforme permettant de donner à un matériau de base en fibres de renforcement une forme spécifiée avant un moulage principal de celui-ci afin d'obtenir un moulage de résine renforcée de fibres d'une forme souhaitée, le procédé comprenant :
un dépôt du matériau de base en fibres de renforcement sur un moule fixe avec une forme de surface correspondant à la forme spécifiée ; et
une mise en forme du matériau de base en fibres de renforcement en pressant le matériau de base en fibres de renforcement sur une surface du moule fixe au moyen d'un effecteur terminal (1) tandis que l'effecteur terminal est déplacé,
dans lequel l'effecteur terminal (1) inclut une partie de maintien d'éléments de contact à pression (9) et une pluralité d'éléments de contact à pression (6) qui sont maintenus par la partie de maintien d'éléments de contact à pression (9) de sorte que chacun de certains éléments de contact à pression (6) fasse saillie à partir de la partie de maintien d'éléments de contact à pression (9),
les éléments de contact à pression (6) présentent une forme de tige, et
au moins certains de la pluralité d'éléments de contact à pression (6) sont maintenus par la partie de maintien d'éléments de contact à pression (9) de sorte qu'une longueur de saillie puisse être changée en raison d'une force de réaction à partir du moule fixe (2).

9. Procédé de production de préforme selon la revendication 8,
dans lequel le matériau de base en fibres de renforcement est mis en forme dans un état dans lequel une feuille est disposée entre le matériau de base en fibres de renforcement et l'effecteur terminal.

10. Procédé de production de préforme selon la revendication 9,
dans lequel la feuille est un film de résine thermoplastique.

11. Procédé de production de préforme selon la revendication 9 ou 10,
dans lequel la feuille présente une épaisseur dans une plage de 15 à 200 µm.

12. Procédé de production de préforme selon l'une quelconque des revendications 9 à 11,
dans lequel une feuille présentant une fente est utilisée comme feuille.

13. Procédé de production de préforme selon l'une quelconque des revendications 9 à 12,
dans lequel la feuille est traitée en continu.
